# EUROPÄISCHE PATENTSCHRIFT

(11) **EP 0 833 021 B1**
(45) Veröffentlichungstag und Bekanntmachung des Hinweises auf die Patenterteilung: **13.08.2003**
(21) Anmeldenummer: 97810390.1
(22) Anmeldetag: 19.06.1997
(51) Int. Cl.: E04G 21/18, G01C 15/02, H02G 1/00

(54) **Vorrichtung zum Anbringen von Markierungen an Flächen**
Device for applying markings to surfaces
Dispositif pour réaliser des marques sur des surfaces

(30) Priorität: 29.08.1996 DE 19634800
(43) Veröffentlichungstag der Anmeldung: 01.04.1998
(73) Patentinhaber: HILTI Aktiengesellschaft, 9494 Schaan (LI)
(72) Erfinder: Kousek, Heinz, Dr., 6800 Feldkirch (AT); Noser, Martin, 9490 Vaduz (LI); Gschwend, Hans, 9470 Buchs (CH)
(74) Vertreter: Wildi, Roland

(56) Entgegenhaltungen:
- WO-A-96/17222
- DE-A- 4 013 950
- US-A- 4 752 156

## Beschreibung

Die Erfindung betrifft eine Vorrichtung zum Anbringen von Markierungen an Flächen, insbesondere Wänden und Decken im Bauwesen, gemäss dem Oberbegriff des Patentanspruchs 1.

Die Erstellung von Befestigungspunkten umfasst im wesentlichen das Ausmessen, Positionieren und Markieren der gewünschten Befestigungspunkte und den eigentlichen Befestigungsvorgang am markierten Befestigungspunkt. Der Befestigungsvorgang kann das Vorbereiten von Aufnahmebohrungen zur Aufnahme geeigneter Befestigungselemente, wie beispielsweise Anker, Dübel und/oder Schrauben, umfassen. Er kann aber auch mit Hilfe von Direktsetzverfahren erfolgen, bei denen ein Bolzen oder ähnliches beispielsweise mit Hilfe eines pulverkraftbetriebenen Setzgeräts direkt in den Untergrund eingetrieben wird. Ein wesentlicher Teil der für die Erstellung eines Befestigungspunktes erforderlichen Zeit wird für das Ausmessen, Positionieren und Markieren benötigt. Bei einer hohen Anzahl von Befestigungspunkten muss daher ein grosser Zeit- und Arbeitsaufwand für das Ausmessen, Positionieren und Markieren und die damit verbundenen Rüsttätigkeiten eingeplant werden.

Befestigungen in grösserer Höhe stellen ein besonderes Problem dar, da dazu Hilfsmittel, wie beispielsweise Leitern, Plattformen oder Gerüste, erforderlich sind, um beispielsweise an der Decke oder unterhalb der Decke an der Wand Markierungen auszumessen und anzubringen. Soll beispielsweise eine Zwischendecke abgehängt werden, müssen an der gesamten Deckenfläche Befestigungspunkte ausgemessen und markiert werden. Dazu muss die Leiter oder die Plattform über den gesamten Raum verschoben werden. Zum Ausmessen und Markieren der ausgemessenen Befestigungspunkte muss die Leiter bzw. die Plattform oftmals bestiegen werden. Ähnliches gilt beispielsweise auch für die Vorbereitungen für die Montage abgehängter Kabeltrassen oder Rohrleitungen und dergleichen.

Das Ausmessen und Markieren der vorgesehenen Befestigungspunkte erfolgt vielfach noch mit Hilfe von Massband und Markierstift, wie beispielsweise Bleistift, Kreide etc., mit dem an der vorgesehenen Position ein Punkt, ein Kreuz oder ähnliches an die Wand oder Decke aufgemalt wird. Für die Bestimmung von Linien an Flächen sind auch Hilfsmittel wie Schlagschnur, Markierrad usw. bekannt. Die moderne Lasertechnik bietet eine gewisse Vereinfachung des Ausmess-, Positionier- und Markiervorgangs und ermöglicht eine Positionierung aus der Ferne. Mittels eines gebündelten Laserstrahls wird die gewünschte Position auf eine Fläche, beispielsweise eine Wand oder die Decke, projiziert. Indem der Laserstrahl periodisch rotiert oder abgelenkt wird, können auch Linien auf die im Abstand vom Laser befindliche Fläche projiziert werden, wie in WO 96 17 222 A offenbart. Eine bleibende Markierung am Ort des projezierten Punktes oder der Linie kann jedoch mit dem Laser nicht erstellt werden, da aus Sicherheitsgründen die Laserstrahl-Leistung gering gehalten werden muss. Für derartige Lasersysteme sind in der Regel nur Laserstrahl-Leistungen von maximal etwa 2 mW zulässig, während für die direkte Erstellung von sichtbaren, permanenten Markierungen auf Wänden oder Decken mit dem Laserstrahl Leistungen von einigen 100 W erforderlich wären. Daher muss der aus der Ferne auf die Wand oder die Decke projizierte Punkt oder die Linie immer noch vom Anwender angezeichnet werden. Die Erstellung der Markierung erfolgt wieder auf traditionelle Weise, indem der Anwender am Ort des projizierten Punkts mit einer Kreide oder einem Bleistift einen Punkt oder ein Kreuz anzeichnet.

Bei hellen Lichtverhältnissen und grossen Entfernungen reicht die Laserstrahl-Leistung oft nicht aus, den projizierten Punkt bzw. die projizierte Linie auf der bestrahlten Fläche sichtbar zu machen. Zur Abhilfe dieses Problems sind Hilfsgeräte bekannt geworden, die den Laserstrahl mit Hilfe von lichtelektrischen Detektoren registrieren. Die zeilenförmig angeordneten Detektoren sind mit einer Positionierhilfe verbunden, die dem Anwender mitteilt, in welche Richtung er das Hilfsgerät bewegen muss, um seine Mittenposition exakt mit dem projizierten Punkt zur Übereinstimmung zu bringen. Zu diesem Zweck erzeugt die Positionierhilfe in Abhängigkeit der Position des Hilfsgeräts unterschiedliche akustische Signale. Die Art des Signal bedeutet dem Anwender, in welche Richtung das Hilfsgerät auszurichten ist, damit der Laserstrahl auf die Mittenposition fällt. Die Übereinstimmung der Lage des projizierten Punkts mit der Mittenposition wird beispielsweise durch einen Dauerton angezeigt. Eine am Hilfsgerät vorgesehene Marke bezeichnet die korrekte Position auf der Wand und dient als Hilfe für den Anwender, der die angezeigte Position mit Bleistift, Kreide oder ähnlichem auf der Fläche markiert. Zur Erstellung der Markierungen sind wiederum Hilfsmittel wie Leitern, Plattformen oder Gerüste erforderlich, die im Raum verschoben werden müssen. Dadurch bleibt es dem Anwender nicht erspart, die Leitern oder Plattformen vielfach hinauf- und wieder herabzusteigen, bis alle Markierungen angebracht sind.

Aufgabe der vorliegenden Erfindung ist es daher, eine Vorrichtung zu schaffen, welche das Ausmessen und das Anbringen von Markierungen auf Decken und Wänden, insbesondere bei höher gelegenen Wandabschnitten, erleichtert. Die Vorrichtung soll in Verbindung mit bekannten Laserpositionier-Systemen einsetzbar sein und einfach zu bedienen sein.

Die Lösung dieser Aufgabe besteht in einer Vorrichtung zum Anbringen von Markierungen auf Flächen, insbesondere an Wänden und Decken, welche die im kennzeichnenden Abschnitt des Patentanspruchs 1 angeführten Merkmale aufweist. Die erfindungsgemässe Vorrichtung ist vor allem zum Einsatz im Bauwesen und in der Haustechnik augebildet und umfasst eine lichtelektrische Detektoranordnung zum Detektieren von gebündelten Lichtsignalen einer im Abstand von der Fläche angeordneten Lichtquelle, vorzugsweise eines Lasers, und eine Signale erzeugende Positionierhilfe, die mit der Detektoranordnung zusammenwirkt, um dem Anwender ein Positionieren der Vorrichtung an der Fläche nach Massgabe der detektierten Lichtsignale zu ermöglichen. Zusätzlich ist die Vorrichtung mit einer Markiereinrichtung ausgestattet, mittels der bei korrekter Positionierung der Vorrichtung eine Markierung an der Fläche anbringbar ist.

Gemäss der Erfindung ist die Markiereinrichtung Bestandteil der Vorrichtung. Dadurch wird die Vorrichtung vereinfacht und sie ist für eine Fernbedienung vorbereitet. Der Anwender muss nicht mehr am unmittelbaren Projektionsort an der Wand anwesend sein, um die gewünschte Markierung auf die Fläche zu übertragen. Bleistift oder Kreide können entfallen, da die Vorrichtung bei korrekter Positionierung aktivierbar ist, eine Markierung zu erstellen.

In einer vorteilhaften Ausführungsvariante der Erfindung sind die Detektoranordnung, die Positionierhilfe und die Markiereinrichtung schwenkbar an einer teleskopartig ausziehbaren Lanze angeordnet, die mit Stützrollen zum Führen der Markiereinrichtung entlang der Fläche ausgestattet ist. Im Fall von Befestigungspunkten, die an der Decke oder an hohen Wandabschnitten erforderlich sind, muss der Anwender nicht mehr auf eine Leiter oder auf eine Plattform steigen. Die Lanze mit der an ihrem Ende angeordneten Markiereinrichtung kann auf die erforderliche Länge ausgezogen werden. Der Anwender stellt sich mit der an der Lanze angeordneten erfindungsgemässen Vorrichtung unterhalb des Abschnittes an der Decke oder der Wand auf, an dem die Markierung angebracht werden soll. Die Lanze ist im Bereich der Markiereinrichtung mit Stützrollen ausgestattet, mit deren Hilfe die Markiereinrichtung entlang der Decke oder der Wand bewegbar ist. Der Detektor wird derart ausgerichtet, dass die fotoelektrische Detektoranordnung das Lichtsignal erfasst. Die Schwenkbarkeit der Markiereinrichtung und des Detektors zusammen mit der Positionierhilfe erleichtert das Ausrichten der Vorrichtung. Das von der Positionierhilfe infolge des detektierten Lichtsignals generierte Signal hilft dem Anwender, die Vorrichtung korrekt zu positionieren. Sobald die Vorrichtung korrekt positioniert ist, kann mit Hilfe der Markiereinrichtung an der ermittelten Position eine Markierung angebracht werden. Alles dies erfolgt vom Boden aus, den der Anwender nicht verlassen muss, um die Markierung auf der Fläche anzubringen.

Die Vorrichtung kann mit einem manuell betätigbaren Auslöser für die Markiereinrichtung ausgestattet sein. Sobald das generierte Signal dem Anwender bedeutet, dass die Vorrichtung korrekt positioniert ist, kann dieser beispielsweise den an der Lanze angeordneten Fernauslöser betätigen, und die Markiereinrichtung in Gang setzen. Vorzugsweise ist die Markiereinrichtung derart mit der Detektoranordnung gekoppelt, dass sie bei Detektion der korrekten Positionierung der Vorrichtung automatisch aktivierbar ist.

Die Markiereinrichtung kann beispielsweise einen Bolzen umfassen, der einem Körner ähnelt und bei Vorliegen der korrekten Position aktivierbar ist, um eine kleine Vertiefung in der Fläche zu erzeugen. Mit Vorteil umfasst die Markiereinrichtung eine Spritzvorrichtung für ein Markiermedium, wie beispielsweise Tinte, Tusche oder dergleichen. Ein Bolzen benötigt relativ viel Energie, um insbesondere bei sehr hartem Untergrund eine gut sichtbare Vertiefung herzustellen. Eine Markiereinrichtung nach Art einer Tintenspritzvorrichtung ist einfach bedienbar, benötigt vergleichsweise wenig Energie und ist zuverlässig und erprobt in der Anwendung. Tinten- oder Tuschemarkierungen sind gut sichtbar und können hinsichtlich der Farbe der Markierung einfach angepasst werden, indem die Markiereinrichtung mit einem Markiermedium der gewünschten Farbe versehen wird.

Vorzugsweise ist das Markiermedium in einem im Betrieb unter Druck stehenden Behältnis angeordnet und über eine automatisch betätigbare Abgabedüse, deren Austrittsöffnung im Betrieb der Fläche zugewandt ist, ausbringbar. Die Kombination eines im Betrieb ständig unter Druck stehenden Behältnisses für das Markiermedium mit einem Abgabeventil, das im Normalfall geschlossen ist, erlaubt, die Markierung mit geringem Energieaufwand anzubringen. Das Ventil wird beispielsweise durch ein Solenoid betätigt, welches durch das bei korrekter Positionierung generierte Signal aktivierbar ist. Dazu öffnet das Solenoid das Ventil kurzzeitig und das unter Druck im Behältnis aufbewahrte Markiermedium, beispielsweise Tinte oder Tusche, wird durch die der Fläche zugewandte Austrittsöffnung an der gewünschten Position auf die Fläche aufgespritzt.

Um zu verhindern, dass irrtümlich hintereinander mehrere Markierungen an der selben Position vorgenommen werden, ist die Markiereinrichtung mit einer Schaltelektronik verbunden, die eine Blockierung der Markiereinrichtung während vorwählbarer Zeitabstände erlaubt. Dadurch ist auch bei mehrfachem Generieren des Signals, dass die korrekte Position eingestellt ist, wie dies beispielsweise durch einen periodisch rotierenden Lichtstrahl der Fall sein kann, sichergestellt, dass die eingestellte Position nur einmal markiert wird.

In einer zweckmässigen Ausführungsvariante der Erfindung umfasst die Detektoranordnung zwei Gruppen von lichtelektrischen Detektoren, die beidseits einer Mittenposition zeilenförmig angeordnet sind und im Zusammenwirken mit der Positionierhilfe dem Anwender durch Signalerzeugung angeben, in welche Richtung die Vorrichtung positioniert werden muss, damit das Lichtsignal auf die Mittenposition auftrifft. An der Mittenposition ist vorzugsweise ein Strahlteiler angeordnet. Der Strahlteiler spaltet das einfallende Lichtsignal in zwei Teile auf, wobei das Signal jedes Lichtpfades auf einen der Detektoren geleitet wird. Diese Anordung ist einfach herzustellen und schaltungstechnisch mit keinem besonderen Aufwand verbunden.

Die bei der Detektion des Lichtstrahls von der Positionierhilfe erzeugten Signale können dem Anwender optisch mitgeteilt werden, beispielsweise durch eine LED-Anzeige, die durch Farbe oder Position angibt, auf welchen Detektor der Lichtstrahl auftrifft. Es erweist sich jedoch als zweckmässig, wenn die von der Positionierhilfe erzeugten Signale akustische Signale sind. Die akustischen Signale, die bei Erfassung des Lichtsignals durch die Detektoren auf der einen Seite der Mittenposition erzeugt werden, unterscheiden sich von den akustischen Signalen, die bei einer Erfassung durch die Detektoren auf anderen Seite generiert werden. Beispielsweise sind die Signale gepulste Töne in unterschiedlichen Frequenzen. Auf diese Weise wird dem Anwender die Richtung mitgeteilt, in der die Vorrichtung bewegt werden muss, damit der Lichtstrahl auf die Mittenposition der Detektoranordnung auftrifft. Das Erreichen der Mittenposition kann beispielsweise durch einen Dauerton signalisiert werden, der erzeugt wird, wenn das vom Strahlteiler am Ort der Mittenposition aufgespaltene Lichtsignal auf die fotoelektrischen Detektoren zu beiden Seiten der Mittenposition fällt.

Zweckmässigerweise umfasst die Detektoranordnung wenigstens zwei lichtelektrische Detektoren, die beidseits der Mittenposition angeordnet sind. Damit auch unter einem Winkel einfallende Lichtsignale von den Detektoren erfasst werdem, ist jedem Detektor ein im wesentlichen parabolischer Reflektor vorgelagert, der zur Konzentration der einfallenden, gebündelten Lichtsignale auf den lichtelektrischen Detektor dient. Auf diese Weise können auch die Lichtsignale von nicht exakt gebündelten Lichtquellen erfasst werden, wie dies insbesondere im Fall der Verwendung von Lichtquellen, die kein kohärentes Licht emittieren, auftreten kann. Auch kann eine nicht exakte Ausrichtung der Lichtquelle und eine leichte Schrägstellung der Vorrichtung kompensiert werden. Die dabei auftretenden Fehler beim Anbringen der Markierung sind vernachlässigbar.

Mit Vorteil ist der Detektoranordnung eine Filteranordnung vorgeschaltet, die im wesentlichen nur für die Wellenlänge(n) des von der Lichtquelle emittierten Lichtsignals durchlässig ist. Vorteilhafterweise ist die Filteranordnung auswechselbar, um das Gerät an die Verwendung unterschiedlicher Lichtquellen anpassen zu können. Auf diese Weise gelangt nur das von der Lichtquelle emittierte Lichtsignal zur Detektoranordnung. Eine Fehlauslösung der Markiereinrichtung durch einfallendes Fehllicht kann dadurch vermieden werden.

Im folgenden wird die Erfindung unter Bezugnahme auf ein in den Figuren schematisch dargestelltes Ausführungsbeispiel näher erläutert. Es zeigen:
Fig. 1 eine perspektivische Ansicht der erfindungsgemässen Vorrichtung;
Fig. 2 einen Querschnitt der Vorrichtung gemäss Fig. 1;
Fig. 3 einen Längsschnitt der Vorrichtung gemäss Fig. 1; und
Fig. 4 die erfindungsgemässe Vorrichtung im Einsatz.

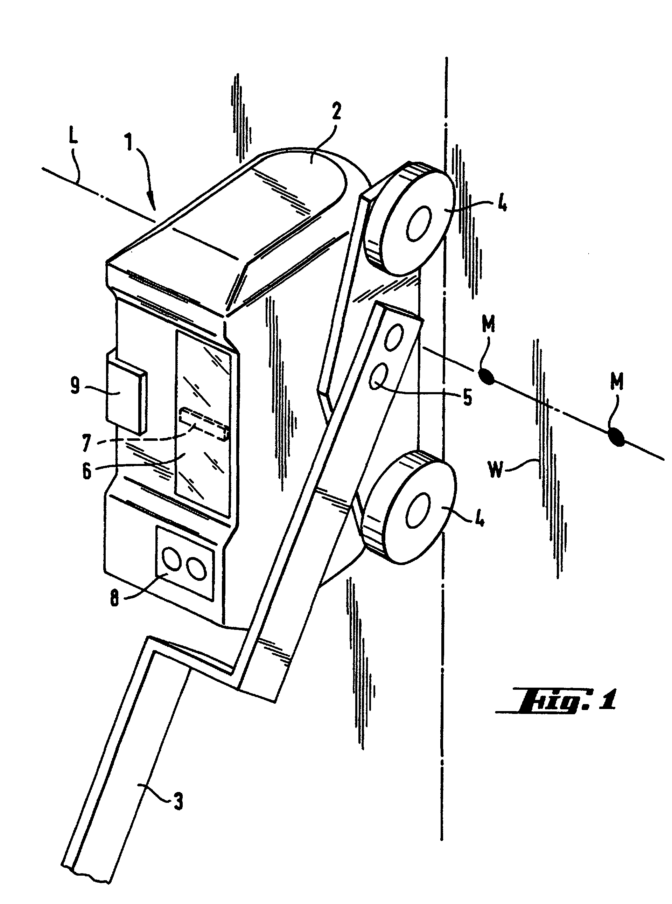

Das in Fig. 1 dargestellte Ausführungsbeispiel der erfindungsgemässen Vorrichtung ist gesamthaft mit dem Bezugszeichen 1 versehen. Es umfasst ein vorzugsweise aus Kunststoff bestehendes Gehäuse 2, das an einer Lanze 3 befestigt ist, die vorzugsweise teleskopartig ausziehbar ist. Das gesamte Gehäuse 2 ist schwenkbar, was durch das Gelenk 5 angedeutet ist. Die Lanze 3 ist im Bereich der Halterung des Gehäuses 2 mit Rollen 4 ausgestattet Die Rollen erleichtern es, das Gehäuse entlang einer Fläche, beispielsweise einer Wand W zu führen, um das Lichtsignal einer vorzugsweise kohärenten Lichtquelle mit Hilfe einer Detektoranordung zu detektieren, die hinter einem Signaleintrittsfenster 6 an der Frontseite des Gehäuses angeordnet ist und beispielsweise aus Plexiglas besteht. Die Vorrichtung 1 ist zum Anbringen von Markierungen M entlang einer von der Lichtquelle an eine Fläche, beispielsweise eine Wand W oder eine Decke, projizierten Uchtspur ausgebildet. Etwa mittig der Längserstreckung des Signaleintrittsfensters 6 ist eine Mittenposition 7 ausgezeichnet, die bei der Positionierung der Vorrichtung zum Anbringen der Markierung eine wichtige Rolle spielt und deren Funktionsweise im folgenden noch näher erläutert wird. An der Frontseite des Gehäuses 2 ist noch ein Bedienfeld 8 angedeutet, über welches die Vorrichtung beispielsweise ein- und ausgeschaltet werden kann. Das Bedienfeld 8 kann beispielsweise auch noch mit Anzeigen für die Funktionsbereitschaft der Vorrichtung versehen sein. Ein Schnappverschluss 9 verriegelt einen Schwenkdeckel, der auf der abgewandten Seite des Gehäuses 2 angelenkt ist und den Zugang ins Innere der Vorrichtung 1 ermöglicht.

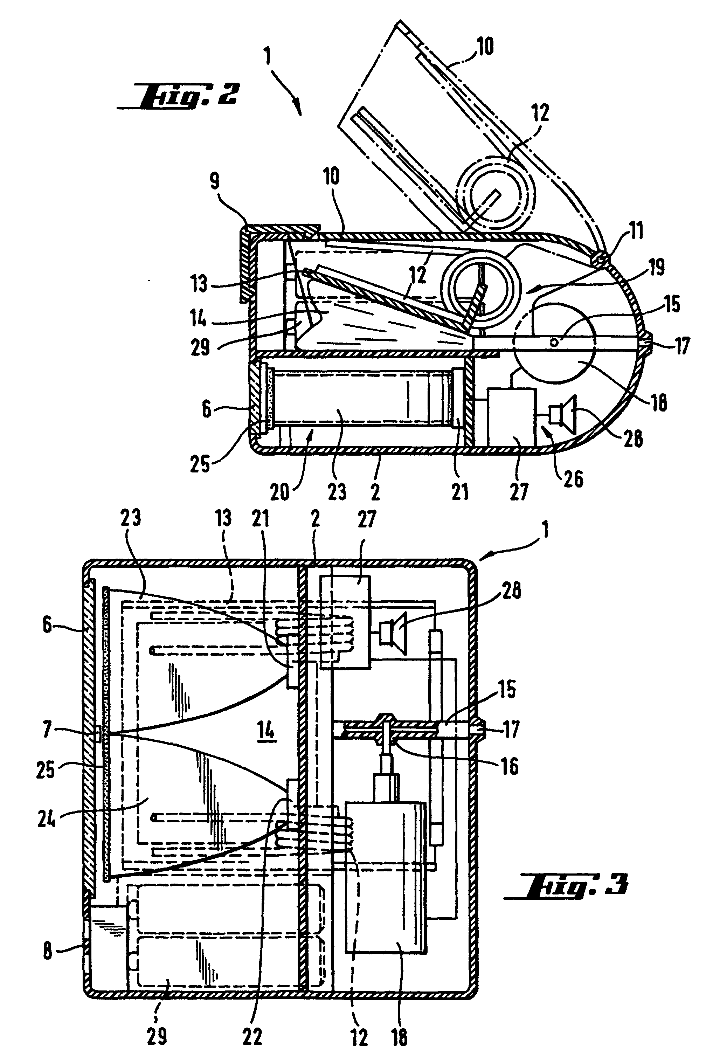

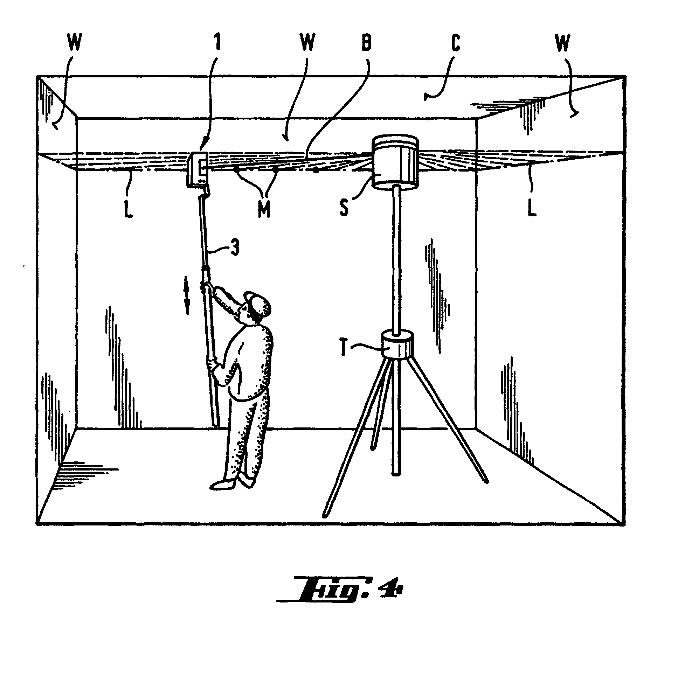

In den Fig. 2 und 3 ist die Vorrichtung im Querschnitt bzw. im Längsschnitt dargestellt. Aus Gründen der Übersichtlichkeit beschränkt sich die Darstellung auf die für das Verständnis der Erfindung wesentlichen Bestandteile der Vorrichtung 1. Innerhalb des Gehäuses 2 sind eine Detektoranordnung 20, eine Positionierhilfe 26 und eine Markiereinrichtung 19 angeordnet. Die Detektoranordnung 20 umfasst wenigstens zwei fotoelektrische Detektoren 21, 22 die beidseits einer Mittenposition 7 hinter dem Signaleintrittsfenster 6 angeordnet sind. Den fotoelektrischen Detektoren 21, 22 sind Im wesentlichen parabolische Reflektoren 23, 24 vorgelagert, die die unter unterschiedlichen Winkeln eintreffenden Lichtsignale zum jeweiligen fotoelektrischen Detektor 21 bzw. 22 leiten. Unmittelbar hinter dem Signaleintrittsfenster 6 ist eine Filteranordnung 25 vorgesehen, die nur für die Wellenlänge(n) des von der Lichtquelle eintreffenden Lichtsignals durchlässig ist. Vorzugsweise ist die Filteranordnung 25 derart im Gehäuse 2 angeordnet, dass sie leicht auswechselbar ist, um die Vorrichtung 1 an unterschiedliche Lichtquellen anpassen zu können. Zu diesem Zweck können auch die lichtelektrischen Detektoren 21, 22 leicht auswechselbar angeordnet sein. Am Ort der Mittenposition 7 ist vorzugsweise ein Strahlteiler angeordnet, der das auftreffende Lichtsignal in zwei Anteile aufspaltet, die auf beide Detektoren geleitet werden.

Die Detektoranordnung 20 ist mit einer Positionierhilfe 26 verbunden, die eine Elektronik 27 und einen Signalgenerator 28 umfasst. Die Elektronik 27 umfasst Signalverstärker und Komparatoren, die unterscheiden, auf welchen der fotoelektrischen Detektoren 21, 22 das Lichtsignal auftrifft. In Abhängigkeit davon, welcher der Detektoren 21, 22 von dem Lichtsignal beaufschlagt wird, erzeugt die Elektronik ein Signal, das den Signalgenerator 28 aktiviert. Der Signalgenerator 28 ist im dargestellten Ausführungsbeispiel ein kleiner Lautsprecher, der beispielsweise Töne unterschiedlicher Frequenz erzeugt, die dem Anwender mitteilen, wie die Lage der Vorrichtung 1 verändert werden muss, um sie richtig zu positionieren. Bei korrekter Positionierung trifft das Lichtsignal auf den am Ort der Mittenposition 7 angeordneten Strahlteiler, der das Signal aufspaltet und zu beiden Detektoren 21, 22 leitet. In diesem Fall wird von beiden fotoelektrischen Detektoren 21, 22 ein Lichtsignal detektiert und in Form von elektrischen Impulsen der Elektronik 27 übermittelt. Die Elektronik 27 regt daraufhin den Signalgenerator 28 beispielsweise zur Erzeugung eines Dauertons an, der dem Anwender bedeutet, dass die Vorrichtung 1 korrekt positioniert ist. Eine im Gehäuse 2 integrierte Energiequelle 29, beispielsweise in Form von Batterien oder Akkumulatoren, sorgt für die nötige Energie, damit die Elekronik 27 die Signale verstärken und der Signalgenerator 28 betrieben werden kann. Die Elektronik 27 wird nicht näher beschrieben, da ihr Aufbau dem Fachmann geläufig ist.

Zusätzlich zu der Detektoranordnung 20 und der Positionierhilfe 26 ist die Vorrichtung mit einer Markiereinrichtung 19 ausgestattet, die es ermöglicht, bei korrekt positionierter Vorrichtung 1 eine Markierung an eine Fläche, beispielsweise eine Wand oder eine Decke anzubringen. Die Markiereinrichtung 19 umfasst eine Spritzeinrichtung für ein Markiermedium, beispielsweise Tinte oder Tusche. Gemäss dem dargestellten Ausführungsbeispiel besteht die Spritzeinrichtung aus einem Behältnis 14, in dem die Tinte oder Tusche unter Druck gehalten ist, und einer Abgabedüse 15, deren Austrittsöffnung 17 im Betrieb der Vorrichtung 1 der zu markierenden Fläche zugewandt ist. Im vorliegenden Ausführungsbeispiel ist die Austrittsöffnung 17 für die Tinte oder Tusche an der Rückseite des Gehäuses 2 angeordnet und liegt im wesentlichen der Mittenposition 7 gegenüber. Die Abgabedüse 15 ist im Normalzustand geschlossen, wozu ein von einem Solenoid 18 aktivierbares Klemmelement 16 vorgesehen ist. Zum Anbringen einer Markierung wird die Abgabedüse 15 kurzfristig geöffnet, Indem das Klemmelement 16 kurzfristig vom Solenoid angehoben wird. Dabei wird ein definiertes Volumen der im Behältnis 14 unter Druck stehenden Tinte oder Tusche durch die Austrittsöffnung 17 auf die Fläche gespritzt. Gemäss dem dargestellten Ausführungsbeispiel der erfindungsgemässen Vorrichtung ist die Tinte oder Tusche in einem Beutel 14 untergebracht, auf den über eine Klemmplatte 13 Druck ausgeübt wird. Die Klemmplatte 13 wird von einer Feder 12 druckbeaufschlagt, die am Schwenkdeckel 10 befestigt ist. Der Schwenkdeckel 10 ist über ein Gelenk 11 am Gehäuse 2 angelenkt und erlaubt den Zutritt in das Innere des Gehäuses 2, beispielsweise um einen neuen Tinten- oder Tuschebeutel 14 einzusetzen oder um die Batterien 29 zu wechseln. Beim Schliessen des Schwenkdeckels 10 wird die Feder 12 gegen die Klemmplatte 13 gepresst, die ihrerseits den Beutel 14 unter Druck hält. Der Schwenkdeckel 10 wird durch den Schnappverschluss 9 verriegelt.

Bei dem geschilderten Ausführungsbeispiel der Erfindung ist die Austrittsöffnung 17 für das Markiermedium an der dem Signaleintrittsfenster 6 gegenüberliegenden Seite des Gehäuses 2 angeordnet. Es versteht sich, dass diese Anordnung nicht zwingend erforderlich ist. Im Prinzip kann die Austrittsöffnung 17 auch an anderen Positionen des Gehäuses vorgesehen sein. Es muss nur eine der Anwendung gerechte räumliche Beziehung zwischen der Mittenposition 7 der Detektoranordnung 20 und der Austrittsöffnung 17 für das Markiermedium vorgesehen sein. in dem beschriebenen Ausführungsbeispiel ist die Markiereinrichtung 19 in das die Detektoranordnung 20 und die Positionierhilfe 26 aufnehmende Gehäuse 2 integriert. Die Markiereinrichtung 19 kann aber auch In einem separaten Gehäuse untergebracht sein und räumlich getrennt von der Detektoranordnung 20 und der Positionierhilfe 26 an der Lanze 3 angeordnet sein.

Die Auslösung einer Markierung kann manuell durch einen an der Vorrichtung oder an der Lanze angeordneten Auslöser erfolgen. Vorzugsweise wird die Markiereinrichtung 19 jedoch automatisch ausgelöst. Dazu wird bei korrekter Positionierung der Vorrichtung von der Elektronik 27 nicht nur ein Impuls an den Signalgenerator 28 weitergeleitet, um einen Dauerton zu erzeugen, sondern es wird auch ein Impuls an das Solenoid gegeben, das Klemmelement 16 kurzfristig zu lösen, insbesondere zu heben, damit Tinte oder Tusche durch die Austrittsöffnung 17 auf die zu markierende Fläche gelangen kann. Um zu verhindern, dass nach dem Anbringen einer Markierung am selben Ort eine weitere Markierung erfolgt, ist in der Elektronik vorzugsweise ein Zeitfilter vorgesehen, welches es erlaubt, die Markiereinrichtung 19 während vorwählbarer Zeitabstände zu blockieren. Die dafür erforderliche elektronische Schaltung ist konventionell und dem Fachmann geläufig; auf eine detaillierte Beschreibung kann daher verzichtet werden.

Fig. 4 zeigt eine erfindungsgemässe Vorrichtung 1 im Einsatz. Insbesondere wird die Vorrichtung 1 dazu eingesetzt, Markierungen M in einem bestimmten Abstand unterhalb der Decke C an den Wänden W anzubringen. Dazu wird zunächst ein rotierender Baulaser S bekannter Bauart in der Höhe justiert. Dazu ist der Baulaser S beispielsweise auf einem Dreibein T montiert, das höhenverstellbar ist und eine genaue Ausrichtung des Baulasers S erlaubt. Der vom rotierenden Baulaser S emittierte Laserstrahl B erzeugt auf den Wänden W eine Lichtspur L, die im gewünschten Abstand unterhalb der Decke C entlang den Wänden verläuft. Bei ausreichend schneller Rotationsgeschwindigkeit des Baulasers S erscheint die Lichtspur L permanent an den Wänden W, vorausgesetzt die Lichtverhältnisse und die Kontrastverhältnisse sind günstig. Aufgrund der geringen Leistung des Baulasers S ist die Uchtspur L bei hellen Lichtverhältnissen oder auch schon bei ungünstigen Kontrastverhältnissen aber oft nicht mit freiem Auge sichtbar. Die erfindungsgemässe Vorrichtung 1 hilft dem Anwender, das Uchtsignal B auch bei ungünstigen Lichtverhältnissen zu detektieren. Bei Verwendung der erfindungsgemässen Vorrichtung 1 kann der Anwender Markierungen M auch in grossen Höhen anbringen, ohne dazu Leitem oder Plattformen einsetzen zu müssen. Die an der teleskopartig ausziehbaren Lanze 3 montierte Vorrichtung 1 wird an der Wand in der Höhe verschoben, bis das Lichtsignal B in die Detektoranordnung gelangt. Das akustische Signal bedeutet dem Anwender, wie die Position der Vorrichtung zu verändern ist, damit das Lichtsignal B auf die Mittenposition auftrifft. Sobald dies der Fall ist, wird dies dem Anwender akustisch mitgeteilt und gleichzeitig die Markierung M angebracht. Auf diese Weise kann der Anwender einfach der Wand entlang gehen, um in den gewünschten Abständen die Markierungen M anzubringen.

## Patentansprüche

1. Vorrichtung zum Anbringen von Markierungen an Flächen, insbesondere an Wänden (W) und Decken (C), beispielsweise im Bauwesen oder der Haustechnik, mit einer lichtelektrischen Detektoranordnung (20) zum Detektieren von gebündelten Lichtsignalen (B) einer im Abstand von der Fläche angeordneten Lichtquelle (S), vorzugsweise eines Lasers, und mit einer Signale erzeugenden Positionierhilfe (26), die mit der Detektoranordnung (20) zusammenwirkt, um dem Anwender ein Positionieren der Vorrichtung (1) an der Fläche nach Massgabe der detektierten Lichtsignale (B) zu ermöglichen, **dadurch gekennzeichnet, dass** die Vorrichtung (1) eine Markiereinrichtung (19) umfasst, mittels der bei korrekter Positionierung der Vorrichtung (1) eine Markierung (M) an der Fläche anbringbar ist.

2. Vorrichtung nach Anspruch 1, **dadurch gekennzeichnet, dass** die Detektoranordnung (20), die Positionierhilfe (26) und die Markiereinrichtung (19) schwenkbar an einer teleskopartig ausziehbaren Lanze (3) angeordnet sind, die mit Stützrollen (4) zum Führen der Markiereinrichtung (19) entlang der Fläche ausgestattet ist.

3. Vorrichtung nach Anspruch 1 oder 2, **dadurch gekennzeichnet, dass** die Markiereinrichtung (19) bei Detektion der korrekten Positionierung der Vorrichtung (1) automatisch aktivierbar ist.

4. Vorrichtung nach einem der vorangehenden Ansprüche, **dadurch gekennzeichnet, dass** die Markiereinrichtung (19) eine Spritzvorrichtung für ein Markiermedium, beispielsweise Tinte, Tusche oder dergleichen, umfasst.

5. Vorrichtung nach Anspruch 4, **dadurch gekennzeichnet, dass** das Markiermedium in einem im Betrieb unter Druck stehenden Behältnis (14) angeordnet ist und über eine automatisch betätigbare Abgabedüse (15), deren Austrittsöffnung (17) im Betrieb der Fläche zugewandt ist, ausbringbar ist.

6. Vorrichtung nach einem der vorangehenden Ansprüche, **dadurch gekennzeichnet, dass** die Markiereinrichtung (19) mit einer Elektronik (27) verbunden ist, die eine Blockierung der Markiereinrichtung (19) während vorwählbarer Zeitabstände erlaubt.

7. Vorrichtung nach einem der vorangehenden Ansprüche, **dadurch gekennzeichnet, dass** die Detektoranordnung (20) zwei Gruppen von lichtelektrischen Detektoren (21, 22) umfasst, die beidseits einer Mittenposition (7) zeilenförmig angeordnet sind und im Zusammenwirken mit der Positionierhilfe (26) dem Anwender durch Signalerzeugung angeben, in welche Richtung die Vorrichtung (1) positioniert werden muss, damit das Lichtsignal (B) auf die Mittenposition (7) auftrifft, wobei am Ort der Mittenposition (7) vorzugsweise ein Strahlteiler angeordnet ist, der das auftreffende Lichtsignal (B) in zwei Teile aufspaltet, die jeweils zu den lichtelektrischen Detektoren (21, 22) geleitet werden.

8. Vorrichtung nach Anspruch 7, **dadurch gekennzeichnet, dass** die von der Positionierhilfe (26) erzeugten Signale akustische Signale sind.

9. Vorrichtung nach Anspruch 7 oder 8, **dadurch gekennzeichnet, dass** die Detektoranordnung (20) wenigstens zwei lichtelektrische Detektoren (21, 22) umfasst, die beidseits der Mittenposition (7) angeordnet sind, wobei jedem Detektor (21, 22) ein im wesentlichen parabolischer Reflektor (23, 24) zur Konzentration der einfallenden, gebündelten Lichtsignale (B) auf den lichtelektrischen Detektor (21, 22) vorgelagert ist.

10. Vorrichtung nach einem der vorangehenden Ansprüche, **dadurch gekennzeichnet, dass** der Detektoranordnung (20) eine vorzugsweise auswechselbare Filteranordnung (25) vorgeschaltet ist, die im wesentlichen nur für die Wellenlänge(n) des von der Lichtquelle (S) emittierten Lichtsignals (B) durchlässig ist.

## Claims

1. Device for applying markings to surfaces, particularly to walls (W) and ceilings (C), particularly in the building industry or building engineering, with a photoelectric detector arrangement (2) for detecting bundled light signals (B) of a light source (S) disposed at a distance from the surface, preferably a laser, and with a positioning aid (26), which produces signals, that functions in conjunction with the detector arrangement, in order to enable the user to position the device (1) on the surface in accordance with the detected signals, **characterized in that** the device (1) includes a marking device (19), by means of which, with correct positioning of the device (1), a marking (M) can be applied to the surface.

2. Device in accordance with claim 1, **characterized in that** the detector arrangement (20), the positioning aid (26) and the marking device (19) are disposed such that they can swivel on a telescopic, extensible lance (3) that is fitted with support rollers (4) for moving the marking device (19) over the surface.

3. Device in accordance with claim 1 or 2, **characterized in that** the marking device (19) can be automatically activated on detection of the correct positioning of the device (1).

4. Device in accordance with one of the preceding claims, **characterized in that** the marking device (19) includes a spraying device for a marking medium, for example ink, Indian ink or suchlike.

5. Device in accordance with claim 4, **characterized in that** the marking medium is contained in a vessel (14) that is under pressure during operation and that can be extracted by means of an automatically operable output nozzle (15), the outlet opening (17) of which faces the surface during operation.

6. Device in accordance with one of the preceding claims, **characterized in that** the marking device (19) is connected to electronics (27) that enable blocking of the marking device (19) during pre-selectable time-periods.

7. Device in accordance with one of the preceding claims, **characterized in that** the detector arrangement (20) includes two sets of photoelectric detectors (21, 22), that are disposed in lines either side of a central position (7) and, in conjunction with the positioning aid (26),- shows the user, by generating signals, which direction the device (1) should be positioned in, such that the light signal (B) encounters the central position (7), whereby a beam divider, which splits the oncoming light signal (B) into two parts that are both directed to the photoelectric detectors (21, 22), is preferably disposed at the point of the central position (7).

8. Device in accordance with claim 7, **characterized in that** the signals produced by the positioning aid (26) are acoustic signals.

9. Device in accordance with claim 7 or 8, **characterized in that** the detector arrangement (20) comprises at least two photoelectric detectors (21, 22) that are disposed both sides of a central position (7), whereby each detector (21, 22) is held in front of a substantially parabolic reflector (23, 24) for concentrating the incident, bundled light signals (B) onto the photoelectric detectors (21, 22).

10. Device in accordance with one of the preceding claims, **characterized in that** the detector arrangement (20) is located, in series, in front of a filter arrangement (25) that can preferably be replaced and that is essentially only penetrable to the wavelengths of the light signals (B) that are emitted by the light source (S).

## Revendications

1. Dispositif pour réaliser des marquages sur des surfaces, en particulier sur des murs (W) et des plafonds (C), par exemple dans le secteur du bâtiment ou dans la construction d'habitations, comprenant un agencement de détection photoélectrique (20) pour détecter des signaux lumineux en faisceaux (B) d'une source lumineuse (S) disposée à distance de la surface, de préférence d'un laser, et comprenant un moyen d'aide au positionnement (26) qui coopère avec l'agencement de détection (20) pour permettre à l'utilisateur de positionner le dispositif (1) sur la surface en fonction des signaux lumineux détectés (B), **caractérisé en ce que** le dispositif (1) comprend un dispositif de marquage (19) permettant de réaliser un marquage (M) sur la surface en cas de positionnement correct du dispositif (1).

2. Dispositif selon la revendication 1, **caractérisé en ce que** l'agencement de détection (20), le moyen d'aide au positionnement (26) et le dispositif de marquage (19) sont montés pivotants sur une canne télescopique (3) qui est munie de roulettes d'appui (4) pour guider le dispositif de marquage (19) le long de la surface.

3. Dispositif selon la revendication 1 ou 2, **caractérisé en ce que** le dispositif de marquage (19) peut être activé automatiquement en cas de détection du positionnement correct du dispositif (1).

4. Dispositif selon une des revendications précédentes,
**caractérisé en ce que** le dispositif de marquage (19) comprend un dispositif de projection pour un produit de marquage, par exemple de l'encre, de l'encre de Chine ou analogue.

5. Dispositif selon la revendication 4, **caractérisé en ce que** le produit de marquage est disposé dans un récipient (14) mis en pression lors du fonctionnement et peut être expulsé à travers une buse de sortie à actionnement automatique (15) dont l'orifice de sortie (17) est tourné vers la surface lors du fonctionnement.

6. Dispositif selon une des revendications précédentes, **caractérisé en ce que** le dispositif de marquage (19) est relié à une électronique (27) qui permet de bloquer le dispositif de marquage (19) pendant des intervalles de temps présélectionnés.

7. Dispositif selon une des revendications précédentes, **caractérisé en ce que** l'agencement de détection (20) comprend deux groupes de détecteurs photoélectriques (21, 22) qui sont disposés en lignes de part et d'autre d'une position médiane (7) et qui, en coopérant avec le moyen d'aide au positionnement (26), indiquent à l'utilisateur par la production de signaux la direction dans laquelle le dispositif (1) doit être positionné pour que le signal lumineux (B) frappe la position médiane (7), à l'emplacement de la position médiane (7) étant disposé de préférence un séparateur de faisceaux qui divise le signal lumineux incident (B) en deux parties, lesquelles sont dirigées chacune vers les détecteurs photoélectriques (21, 22).

8. Dispositif selon la revendication 7, **caractérisé en ce que** les signaux produits par le moyen d'aide au positionnement (26) sont des signaux acoustiques.

9. Dispositif selon la revendication 7 ou 8, **caractérisé en ce que** l'agencement de détection (20) comprend au moins deux détecteurs photoélectriques (21, 22) qui sont disposés de part et d'autre de la position médiane (7), chaque détecteur (21, 22) étant précédé d'un réflecteur sensiblement parabolique (23, 24) pour concentrer les signaux lumineux en faisceaux incidents (B) sur le détecteur photoélectrique (21, 22).

10. Dispositif selon une des revendications précédentes, **caractérisé en ce que** l'agencement de détection (20) est précédé d'un agencement de filtrage de préférence échangeable (25) qui pour l'essentiel n'est franchissable que par la ou les longueurs d'ondes du signal lumineux (B) émis par la source lumineuse (S).
